# EUROPÄISCHE PATENTSCHRIFT

(11) **EP 3 643 546 B1**
(45) Veröffentlichungstag und Bekanntmachung des Hinweises auf die Patenterteilung: **09.08.2023**
(21) Anmeldenummer: 19204362.8
(22) Anmeldetag: 21.10.2019
(51) Int. Cl.: B60H 1/00

(54) **VORRICHTUNG ZUR BESTIMMUNG EINER TEMPERATUR IN EINEM INSASSENRAUM EINES FAHRZEUGS**
DEVICE FOR DETERMINING A TEMPERATURE IN A PASSENGER AREA OF A VEHICLE
DISPOSITIF DE DÉTERMINATION D'UNE TEMPÉRATURE DANS L'HABITACLE D'UN VÉHICULE

(30) Priorität: 24.10.2018 DE 102018126484
(43) Veröffentlichungstag der Anmeldung: 29.04.2020
(73) Patentinhaber: MAN Truck & Bus SE, 80995 München (DE); Volkswagen AG, 38440 Wolfsburg (DE); Airbus Operations GmbH, 21129 Hamburg (DE)
(72) Erfinder: YILDIRIM, Kemal-Edip, 82194 Gröbenzell (DE); BADER, Viktor, 38448 Wolfsburg (DE); ERCAN, Ayse, 80939 München (DE); GORES, Ingo, 21129 Hamburg (DE)
(74) Vertreter: v. Bezold & Partner Patentanwälte - PartG mbB

(56) Entgegenhaltungen:
- EP-A2- 2 030 817
- EP-B1- 2 030 817
- WO-A1-2020/065218
- DE-A1-102008 037 815
- US-A1- 2013 255 930
- ANONYMOUS: "DIN ISO 14505-2 2007-04 Ergonomie der thermischen Umgebung - Beurteilung der thermischen Umgebung in Fahrzeugen - Teil 2: Bestimmung der Äquivalenttemperatur (ISO 14505-2:2006); Deutsche Fassung EN ISO 14505-2:2006 [Ergonomics of the thermal environment - Evaluation of thermal environments in vehicl", DIN ISO 14505-2, DIN ISO, DE, 1 April 2004 (2004-04-01), pages 1-34, XP009517498, DOI: 10.31030/9765403

## Beschreibung

Die Erfindung betrifft eine Vorrichtung zur Bestimmung einer Temperatur in einem Insassenraum eines Fahrzeugs mit einer Sensoreinrichtung zur Erfassung von Infrarot, IR,-Strahlung, beispielsweise eine IR-Kamera und/oder Wärmebildkamera.

Die Optimierung der klimatischen Verhältnisse in Fahrzeugen wurde in letzter Zeit mit immer höherem Entwicklungsaufwand bedacht. Moderne Kraftfahrzeuge haben bezogen auf die Sitzverteilung und Anordnung oftmals ein kompliziertes Klimatisierungssystem. Unterschiedliche Luft-, Heizungs- und Klimakanäle können geöffnet und geschlossen werden oder werden durch eine sogenannte "Klimaautomatik" geregelt. Abhängig von der Geschwindigkeit des Fahrzeugs, von der Besetzungsdichte, von Sonneneinstrahlung, Außentemperatur, Fahrgeschwindigkeit, Einsatz von Luftfiltern und dgl. verändern sich die klimatischen Verhältnisse in einem solchen Raum oder Raumbereich gravierend innerhalb kürzester Zeit.

Aus der Praxis ist bekannt, die Kabinentemperatur der Fahrzeuge punktuell mit Sensoren zu messen und danach zu regeln. Nachteilig an den bekannten Ansätzen ist, dass geänderte klimatische Verhältnisse nicht oder zumindest nicht ausreichend erfasst werden, beispielsweise Inhomogenitäten bei der Temperaturverteilung in der Kabine, insbesondere bei großräumigen Fahrzeugen, wie Busse oder Flugzeuge, oder Asymmetrien, z. B. durch solare Strahlung und Belastung, wodurch bei einer Seite zu heiß, auf der anderen Seite zu kalt klimatisiert wird.

Aus dem Stand der Technik, z. B. der DE 199 21 518 A1, ist ferner bekannt, zur berührungslosen Bestimmung der Temperaturverteilung in Fahrzeuginnenräumen eine Infrarot(IR)-Kamera zu verwenden. In diesem Zusammenhang offenbart auch die DE 10 2008 037 815 A1 eine Vorrichtung zur Regelung der Innenraumtemperatur in dem Fahrgastraum eines Fahrzeuges. Die vorgenannte Vorrichtung weist dabei einen Sensor zur Temperaturerfassung und einen Innenraumtemperatur-Regler auf. Die Vorrichtung ist ferner mit einer Kamera zur Erfassung zumindest eines Teilbereichs des Fahrgastraums versehen, der zumindest Teile der unterschiedlichen Zonen des Fahrgastraums umfasst. Die Kamera ist als eine IR-Kamera mit einer Vielzahl von in Array-Form angeordneten IR-Sensoren zur Erzeugung eines Wärmebildes ausgebildet. Das Wärmebild der IR-Kamera und insbesondere die Oberflächentemperatur der Fahrgäste und/oder im Bereich um diese herum ist an einer Anzeige im Fahrgastraum insbesondere farbig darstellbar. Nachteilig an den bekannten Ansätzen ist jedoch, dass damit eine nicht ausreichend genaue Bestimmung der Innenraumtemperatur und die aktuelle Personenbehaglichkeit ermöglicht werden.

Entsprechend ist es daher Aufgabe der Erfindung, eine verbesserte Technik bereitzustellen, mit der Nachteile bekannter Lösungen vermieden werden können. Es ist insbesondere eine Aufgabe der Erfindung, eine verbesserte und kostengünstige Technik zur genaueren Bestimmung der Lufttemperatur im Insassenraum und/oder des individuellen Behaglichkeitsempfindens von Insassen bereitzustellen.

Diese Aufgaben werden erfindungsgemäß durch eine Vorrichtung zur Bestimmung einer Temperatur in einem Insassenraum eines Fahrzeugs mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß der Erfindung wird eine Vorrichtung zur Bestimmung einer Temperatur in einem Insassenraum eines Fahrzeugs bereitgestellt, insbesondere eine Vorrichtung zur berührungslosen Bestimmung einer Temperatur in einem Insassenraum. Die Vorrichtung umfasst eine Sensoreinrichtung zur Erfassung von Infrarot, IR,-Strahlung, nachfolgend auch als IR-Sensoreinrichtung bezeichnet. Die Sensoreinrichtung kann als eine IR-Kamera und/oder eine Wärmebildkamera ausgebildet sein. Die Sensoreinrichtung kann auch mehrere derartige IR-Kameras und/oder Wärmebildkameras aufweisen, was insbesondere bei großräumigen Insassenräumen vorteilhaft ist, um alle Bereiche mit der Sensoreinrichtung erfassen zu können. Die Sensoreinrichtung ist vorzugsweise so angeordnet, dass sie IR-Strahlung eines Insassenraums des Fahrzeugs erfasst.

Das Fahrzeug kann ein Kraftfahrzeug, ein Personenkraftwagen (PKW) oder ein Omnibus sein. Bei dem Fahrzeug kann es sich jedoch auch um ein Luftfahrzeug (Flugzeug) oder einen Personenzug handeln.

Gemäß der Erfindung weist die Vorrichtung eine Temperaturbestimmungseinrichtung auf, die konfiguriert ist, in Abhängigkeit von Messdaten der Sensoreinrichtung eine Oberflächentemperatur eines in dem Insassenraum des Fahrzeugs befindlichen vorbestimmten Gegenstands zu bestimmen und aus der bestimmten Oberflächentemperatur des Gegenstands mittels eines ersten funktionellen Zusammenhangs eine Lufttemperatur im Insassenraum des Fahrzeugs zu bestimmen. Mit anderen Worten wird die Lufttemperatur im Insassenraum in Relation zu einer Temperatur eines vorbestimmten Objektes ermittelt. Mit Hilfe der IR-Sensoreinrichtung können zwar in an sich bekannter Weise Temperaturen von Objekten im Innenraum gemessen werden, jedoch nicht direkt Lufttemperaturen. Untersuchungen im Rahmen der Erfindung haben jedoch gezeigt, dass die Lufttemperatur in der Nähe eines Objektes aus der Objekttemperatur über eine mathematische Funktion, in diesem Dokument auch als erster funktioneller Zusammenhang bezeichnet, berechnet werden kann. Dieser erste funktionelle Zusammenhang kann vorab experimentell mit Testmessungen und/oder Regressionsanalysen ermittelt werden und in der Vorrichtung hinterlegt werden, z. B. in Form einer Kennlinie, einer Formel oder einer sog. Look-up-Tabelle, die unterschiedlichen Objekttemperaturen die Lufttemperaturen zuordnet, die in der Nähe des Objekts dann herrschen.

Bei dem Gegenstand kann es sich um einen Interieur-Gegenstand des Insassenraums handeln, vorzugsweise solche Interieur-Gegenstände oder deren Bereiche, die im Sichtkegel der IR-Sensoreinrichtung liegen und normalerweise von Insassen nicht verdeckt sind, wie beispielsweise ein oberer Rand- oder Eckbereich eines Insassensitzes, ein Bereich der Innenverkleidung oder eine Trag- oder Haltestruktur im Dachbereich. Vorteilhaft ist, wenn immer der gleiche Gegenstand oder Teil des Gegenstands als Bezugspunkt für die Messung der Objekttemperatur herangezogen wird, um möglichst genaue Ergebnisse zu erzielen. In diesem Sinne soll der Gegenstand vorbestimmt sein.

Die mittels des ersten funktionellen Zusammenhangs bestimmte Lufttemperatur entspricht einer Lufttemperatur in der Nähe des Objektes, dessen Temperatur mit der IR-Sensoreinrichtung gemessen wurde.

Gemäß einer möglichen ersten Weiterbildung der ersten Ausführungsform kann die Temperaturbestimmungseinrichtung konfiguriert sein, zur Erkennung von Inhomogenitäten und/oder Asymmetrien einer Temperaturverteilung im Insassenraum die Oberflächentemperaturen von vorbestimmten Gegenständen in unterschiedlichen Bereichen des Insassenraums zu bestimmen und hieraus mittels des ersten funktionalen Zusammenhangs jeweils Lufttemperaturen in den unterschiedlichen Bereichen des Insassenraums zu bestimmen. Mit anderen Worten können gemäß dieser Variante jeweils die Objekttemperaturen in unterschiedlichen Bereichen des Insassenraums mittels der IR-Sensoreinrichtung gemessen werden, um dann aus den gemessenen Objekttemperaturen jeweils die Lufttemperatur zu ermitteln, die in der Nähe des gemessenen Objekts vorherrscht. Gemäß eines weiteren Aspekts können für die unterschiedlichen Bereiche und/oder Objekte des Insassenraums, deren Lufttemperatur ermittelt werden sollen, unterschiedliche mathematische Relationen, d. h. jeweils eigene erste funktionelle Zusammenhänge zwischen Objekttemperatur und Lufttemperatur zur Bestimmung der Lufttemperatur verwendet werden. Beispielsweise kann für jeden Messpunkt, d. h. Objekt, in einem der Bereiche vorab experimentell der funktionelle Zusammenhang zwischen Objekttemperatur und Lufttemperatur bestimmt und in der Vorrichtung hinterlegt werden. Dadurch kann die Genauigkeit der Bestimmung der Lufttemperatur verbessert werden.

Erfindungsgemäß ist die Temperaturbestimmungseinrichtung konfiguriert, in Abhängigkeit von Messdaten der Sensoreinrichtung eine Oberflächentemperatur, vorzugsweise eine Gesichts- und/oder Handtemperatur, für mindestens einen Insassen des Insassenraums zu bestimmen, und aus der bestimmten Oberflächentemperatur mittels eines zweiten funktionellen Zusammenhangs ein Maß für die Personenbehaglichkeit zu bestimmen. Unter einem Maß für die Personenbehaglichkeit wird eine Größe verstanden, die angibt, wie behaglich oder unbehaglich oder mit anderen Worten wie komfortabel sich ein Insasse im Hinblick auf die aktuelle Innenraumtemperatur fühlt. Der zweite funktionelle Zusammenhang stellt eine mathematische Relation zwischen Oberflächentemperatur des Insassen und der Personenbehaglichkeit dar.

Der zweite funktionelle Zusammenhang ist erfindungsgemäß so festgelegt, dass zur Bestimmung des Maßes für die Personenbehaglichkeit eine Äquivalenttemperatur bestimmt wird. Eine derartige Äquivalenttemperatur stellt ein sehr zuverlässiges Maß für die Personenbehaglichkeit dar. Die Äquivalenttemperatur entspricht dabei der vom Menschen empfundenen Temperatur. Die Äquivalenttemperatur ist beispielsweise in der Norm DIN EN ISO 14505-2 - "Ergonomie der thermischen Umgebung - Beurteilung der thermischen Umgebung in Fahrzeugen - Teil 2: Bestimmung der Äquivalenttemperatur" definiert und fasst Lufttemperatur, Luftgeschwindigkeit und Wärmestrahlung zu einem Klimasummenmaß zusammen. Beispielsweise kann aus der mittels der IR-Sensoreinrichtung bestimmten Gesichtstemperatur des Insassen eine Äquivalenttemperatur des Gesichts bestimmt werden.

Im Rahmen der Erfindung wurde jedoch festgestellt, dass eine mathematische Relation zwischen Äquivalenttemperatur des Gesichts und Äquivalenttemperatur eines gesamten Körpers des Insassen existiert, welche experimentell für einen gegebenen Insassenraum bestimmt werden kann. Entsprechend kann gemäß einem weiteren Aspekt ferner aus der mittels der IR-Sensoreinrichtung bestimmten Gesichtstemperatur des Insassen eine Äquivalenttemperatur des gesamten Körpers (Gesamtkörper-Äquivalenttemperatur) bestimmt werden. Hierbei kann die mathematische Relation und/oder der mathematische Zusammenhang zwischen Äquivalenttemperatur des Gesichts und Äquivalenttemperatur des gesamten Körpers des Insassen derart sein, dass der Verlauf dieser Äquivalenttemperatur in einem mittleren Temperaturbereich, der von dem Insassen als angenehmen empfunden wird, im Wesentlichen identisch sind. Im Bereich des Übergangs vom angenehmen in den als zu kalt empfunden Temperaturbereich fällt der angenehme Bereich für die Äquivalenttemperatur des gesamten Körpers jedoch früher in die Richtung des kälteren Bereichs ab. Dies bedeutet z. B., dass in diesem Bereich für eine gegebene Gesichtsoberflächentemperatur die Äquivalenttemperatur des gesamten Körpers kleiner als die Äquivalenttemperatur des Gesichtes ist. Entsprechendes kann für den Bereich des Übergangs vom angenehmen in den als zu warm empfunden Temperaturbereich gelten.

Gemäß einer möglichen Weiterbildung dieser zweiten Ausführungsform kann die Temperaturbestimmungseinrichtung konfiguriert sein, in Abhängigkeit von Messdaten der Sensoreinrichtung eine Oberflächentemperatur eines in einem Nahbereich des Insassen befindlichen Gegenstands zu bestimmen und als Korrekturwert zur Bestimmung des Maßes für die Personenbehaglichkeit, z. B. der Äquivalenttemperatur zu verwenden. Diesem Aspekt liegt die Erkenntnis zu Grunde, dass trotz gleicher Oberflächentemperatur eines Insassen die Personenbehaglichkeit unterschiedlich sein kann, z. B. aufgrund von Schwitzeffekten oder Verzögerungseffekten der Erwärmung eines Gegenstands im Vergleich zur Körperoberflächentemperatur, die entsprechend korrigiert werden können.

Beispielsweise kann die Temperaturbestimmungseinrichtung konfiguriert sein, mittels des Korrekturwerts einen Effekt zu berücksichtigen, wonach nach Überschreiten eines ersten Raumtemperaturschwellenwerts die Oberflächentemperatur eines Insassen bei weiterer Zunahme der Raumtemperatur nicht mehr oder verlangsamt ansteigt, da eine Wärmeabgabe des Insassen zunehmend über Schwitzen erfolgt.

Alternativ oder zusätzlich kann die Temperaturbestimmungseinrichtung konfiguriert sein, mittels des Korrekturwerts einen Effekt zu berücksichtigen, wonach nach Unterschreiten eines zweiten Raumtemperaturschwellenwerts die Oberflächentemperatur eines Insassen bei weiterer Abnahme der Raumtemperatur nicht mehr oder verlangsamt abnimmt, da eine Wärmeerzeugung des Insassen zunehmend über Zittern erfolgt.

Ferner kann der zweite funktionelle Zusammenhang eine Korrekturgröße umfassen, für die je nach Jahreszeit unterschiedliche Werte festgelegt sind. Hierdurch kann genauer berücksichtigt werden, dass die Korrelation zwischen Oberflächentemperatur eines Insassen und seiner Behaglichkeit je nach Jahreszeit unterschiedlich sein kann. Die erste und zweite Ausführungsform sollen sowohl in Kombination als auch unabhängig voneinander als offenbart gelten und beanspruchbar sein.

Ein Nahbereich kann ein Bereich sein, der weniger als 1 Meter, vorzugsweise weniger als 0,5 Meter, weiter vorzugsweise weniger als 0,25 Meter von der Stelle entfernt ist, an der die Oberflächentemperatur des Insassen gemessen wird.

Der zweite funktionelle Zusammenhang und die Höhe des Korrekturwerts zur Korrektur des Schwitzens, Unterkühlung und/oder der Jahreszeiteffekte können beispielsweise wieder vorab im Rahmen von Testmessungen ermittelt werden, z. B. indem verschiedene Temperaturprofile des Insassenraums durchgemessen werden, und die Oberflächentemperatur eines Insassen mit Testpersonen oder Messpuppen gemessen wird, an deren Messstellen, z. B. im Gesicht oder an der Hand, herkömmliche nicht-kontaktlose Temperatursensoren angebracht sind. Gemäß einem weiteren Aspekt kann die Vorrichtung konfiguriert sein, in Abhängigkeit von Messdaten der Sensoreinrichtung eine Insassenbelegung des Fahrzeugs zu bestimmen. Hierbei können entsprechend Algorithmen zur Bildanalyse herangezogen werden, die aus den Daten der IR-Sensoreinrichtung, z. B. der IR-Kamera, die Silhouetten, Oberflächenformen, oder IR-Strahlungsprofile einzelner Insassen erkennt und hieraus die Insassenbelegung bestimmt.

In einer Weiterbildung dieses Aspekts kann die Temperaturbestimmungseinrichtung ferner konfiguriert sein, in Abhängigkeit von der bestimmten Insassenbelegung das Maß für die Personenbehaglichkeit jeweils für mehrere Insassen, vorzugsweise für alle Insassen, zu bestimmen.

Die Erfindung betrifft ferner ein Fahrzeug gemäß Anspruch 8 mit einer Vorrichtung zur Bestimmung einer Temperatur eines Insassenraums, wie sie in diesem Dokument beschrieben ist. Vorstehend wurde bereits erwähnt, dass das Fahrzeug beispielsweise ein Luftfahrzeug, Personenkraftwagen oder ein Omnibus sein kann. Das Fahrzeug umfasst ferner eine Klimaanlage zum Temperieren eines Insassenraums des Fahrzeugs, aufweisend eine Klimasteuerung zur Steuerung oder Regelung der Raumtemperatur des Insassenraums. Hierbei erfolgt die Steuerung oder Regelung der Raumtemperatur des Insassenraums durch die Klimasteuerung in Abhängigkeit von Ausgangsdaten der Temperaturbestimmungseinrichtung.

Gemäß einem Aspekt kann das Fahrzeug eine Vorrichtung gemäß der ersten Ausführungsform in der ersten Weiterbildung umfassen. Hierbei kann die Klimasteuerung ausgebildet sein, in Abhängigkeit von den für die unterschiedlichen Bereiche bestimmten Lufttemperaturen eine für die unterschiedlichen Bereiche spezifische Regelung oder Steuerung der Klimaanlage durchzuführen. Diese eröffnet die Möglichkeit, die Raumtemperatur ganzheitlich zu betrachten und zonal zu regeln und Inhomogenitäten und Asymmetrien der Lufttemperaturverteilung im Insassenraum durch gezielte Maßnahmen zu eliminieren bzw. abzuschwächen. Ferner ergeben sich hierdurch Energieeinsparungen, da die Maßnahmen gezielt zonal eingesetzt werden.

Gemäß einem weiteren Aspekt kann das Fahrzeug eine Vorrichtung zur Bestimmung einer Temperatur in einem Insassenraum des Fahrzeugs umfassen, die konfiguriert ist, in Abhängigkeit von Messdaten der Sensoreinrichtung eine Insassenbelegung des Fahrzeugs zu bestimmen, wie vorstehend bereits beschrieben wurde. Hierbei kann die Klimasteuerung ausgebildet sein, eine Steuerung oder Regelung der Raumtemperatur in Abhängigkeit von der bestimmten Insassenbelegung durchzuführen, vorzugsweise nur in denjenigen Bereichen des Innenraums, in denen sich mindestens ein Insasse befindet. Hierdurch wird eine weitere Energieeinsparung ermöglicht, da Klimamaßnahmen gezielt nur in den Bereichen eingesetzt werden, in denen sich auch Insassen befinden.

Gemäß einem weiteren Aspekt kann das Fahrzeug eine Vorrichtung zur Bestimmung einer Temperatur in einem Insassenraum des Fahrzeugs umfassen, die konfiguriert ist, in Abhängigkeit von der bestimmten Insassenbelegung das Maß für die Personenbehaglichkeit jeweils für mehrere Insassen, vorzugsweise für alle Insassen, zu bestimmen, wie vorstehend bereits beschrieben wurde. Hierbei kann die Klimasteuerung ausgebildet sein, eine insassenspezifische Regelung oder Steuerung der Klimaanlage in Abhängigkeit von dem bestimmten Maß der Personenbehaglichkeit für den jeweiligen Insassen durchzuführen. Dadurch kann eine etwaige Unbehaglichkeit der Insassen durch gezielte Maßnahmen gemildert werden, in dem die Klimatisierung entsprechend lokal angepasst wird. Hierdurch wird eine weitere Energieeinsparung ermöglicht, da Klimamaßnahmen gezielt individuell für einzelne Insassen durchgeführt werden können.

Die zuvor beschrieben Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines Fahrzeugs mit einer Vorrichtung zur Bestimmung einer Temperatur in einem Insassenraum gemäß einem Ausführungsbeispiel;
- Figur 2:: eine Illustration der Relation zwischen Objekt- und Lufttemperatur;
- Figur 3A: ein IR-Bild eines Insassenraums mit einer asymmetrischen Temperaturverteilung gemäß einem Ausführungsbeispiel; und
- Figur 3B: ein IR-Bild eines beispielhaften Messaufbaus zur experimentellen Bestimmung des zweiten funktionellen Zusammenhangs;
- Figur 3C: ein IR-Bild zur Messung eines Gesichts und eines Objekts gemäß einem Ausführungsbeispiel;
- Figur 4: eine Illustration der Relation zwischen Gesichtstemperatur, Objekttemperatur und Personenbehaglichkeit gemäß einem Ausführungsbeispiel; und
- Figur 5: eine schematische Darstellung eines Flugzeugs.

Gleiche oder funktional äquivalente Elemente sind dabei in allen Figuren mit denselben Bezugszeichen und zum Teil nicht gesondert beschrieben.

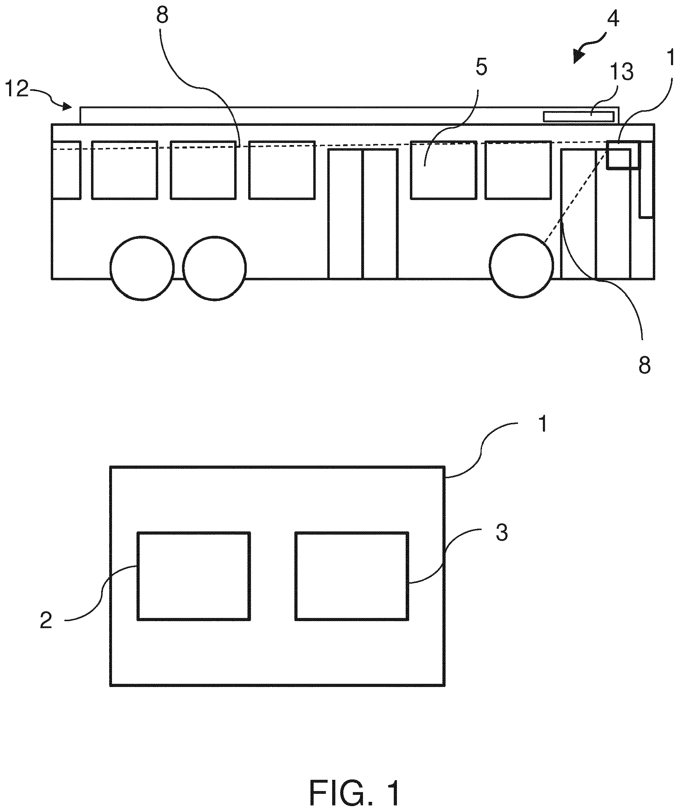

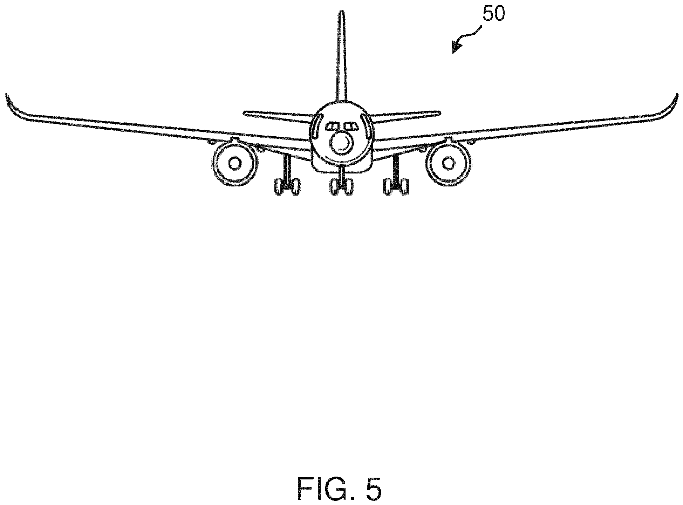

Figur 1 zeigt im oberen Teil der Figur 1 ein Fahrzeug 4 mit einem Insassenraum 5, in dem eine Vorrichtung 1 zur Bestimmung einer Temperatur des Insassenraums 5 angeordnet ist. Die Vorrichtung 1 ist im unteren Teil der Figur 1 nochmals separat stark schematisiert als Blockdiagramm dargestellt. Die Vorrichtung 1 umfasst dabei eine Sensoreinrichtung 2 zur Erfassung von Infrarot, IR,-Strahlung. Die IR-Sensoreinrichtung 2 kann beispielsweise als eine an sich bekannte IR-Kamera und/oder Wärmebildkamera ausgeführt sein. Die Vorrichtung 1 umfasst ferner Temperaturbestimmungseinrichtung 3, die konfiguriert ist, in Abhängigkeit von Messdaten der IR-Sensoreinrichtung 2 eine Lufttemperatur im Insassenraum und/oder ein Maß für die Personenbehaglichkeit zu bestimmen, was nachfolgend noch detaillierter erläutert wird. Das Fahrzeug kann als Omnibus, wie in Figur 1 dargestellt ausgeführt sein. Das Fahrzeug mit der Vorrichtung 1 kann jedoch auch als PKW, als Personenzug oder als Flugzeug ausgeführt sein. Ein Flugzeug 50 ist beispielsweise in Figur 5 dargestellt.

Die Temperaturbestimmungseinrichtung 3 kann dabei baulich in die IR-Sensoreinrichtung 2 integriert sein oder kann separat hiervon vorgesehen sein. Jedenfalls empfängt und verarbeitet die Temperaturbestimmungseinrichtung 3 die Messdaten der IR-Sensoreinrichtung. Die Temperaturbestimmungseinrichtung 3 kann als Mikroprozessor mit einem Speicher ausgeführt und programmtechnisch eingerichtet sein, um die Messdaten der IR-Sensoreinrichtung 2, wie in diesem Dokument beschrieben ist, zu verarbeiten.

Wie in Figur 1 erkennbar ist, ist die Vorrichtung 1 oder zumindest die IR-Sensoreinrichtung 2 so angeordnet, dass ihr IR-Sichtkegel 8 den zu messenden Innenraum 5 möglichst gut erfassen kann. Alternativ können auch mehrere derartige IR-Sensoreinrichtungen 2 vorgesehen sein, die verteilt im Insassenraum angeordnet sind, um jeweils unterschiedliche Bereiche des Insassenraums 5 zu erfassen.

Die Temperaturbestimmungseinrichtung 3 ist konfiguriert, eine Oberflächentemperatur eines in dem Insassenraum 5 des Fahrzeugs 4 befindlichen vorbestimmten Gegenstands zu bestimmen. Lediglich beispielhaft kann es sich bei dem Gegenstand um einen Fahrgastsitz 6a, 6b handeln, wobei insbesondere und wiederum lediglich beispielhaft die Oberflächentemperatur einer äußeren oberen Ecke des Fahrgastsitzes 6a, 6b bestimmt wird, da diese in der Regel von einem Insassen, der sich auf dem Sitz befindet, nicht verdeckt wird.

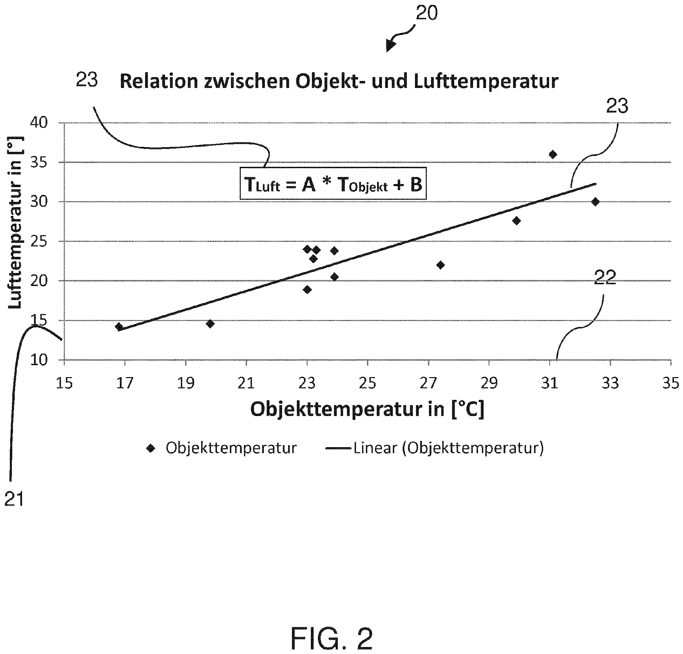

Die Bestimmung von Objekttemperaturen anhand des Bildes einer IR-Kamera ist an sich aus dem Stand der Technik wohlbekannt und daher hier nicht näher beschrieben. In der Regel dient jedoch die Lufttemperatur im Innenraum 5 als Regelgröße der Klimasteuerung. Anstatt nun direkt die Objekttemperatur als Näherung für die Lufttemperatur heranzuziehen, wird vorliegend die Lufttemperatur aus der Objekttemperatur mittels einer vorab experimentell bestimmten mathematischen Relation bestimmt, die im Speicher der Temperaturbestimmungseinrichtung 3 hinterlegt sein kann. Dies ist in Figur 2 näher erläutert.

Figur 2 zeigt eine anhand von Messreihen und Versuchen ermittelte mathematische Relation 20 zwischen einer Objekttemperatur, z. B. der Temperatur des Fahrgastsitzes 6a, 6b im Bereich der oberen Sitzecke 7a, auch als Objekttemperatur 22 bezeichnet, und der Lufttemperatur 21 in unmittelbarer Nähe 11a, 11b hierzu. In Figur 2 sind die experimentell ermittelten Messpunkte aufgetragen sowie eine Regressionsgerade, die den funktionellen Zusammenhang zwischen Objekttemperatur und Lufttemperatur angibt, wobei die Steigung A und der Offset B anhand der Messdaten ermittelt werden.

Die Lufttemperatur gibt die Temperatur an, die in einem festgelegten Abstand zum Objekt gemessen wird. Es können auch unterschiedliche Messkurven und entsprechend funktionelle Zusammenhänge (Regressionsgerade) für unterschiedliche Abstände ermittelt werden. Dann können die Lufttemperaturen in unterschiedlichen Abständen vom Messobjekt ermittelt werden.

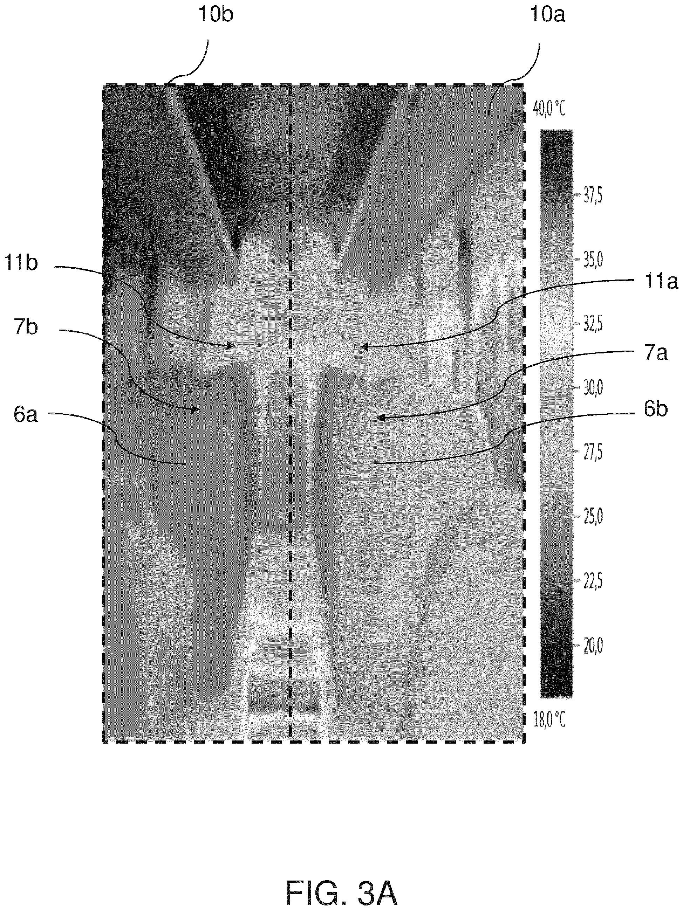

Dies ist in Figur 3A illustriert, die ein IR-Bild eines Insassenraums zeigt. Wie anhand der IR-Bildes erkennbar ist, weist der Insassenraum bzw. die Passagierkabine eine asymmetrische Temperaturverteilung auf: Die rechte Seite 10a ist heller, d. h. wärmer als die linke Seite 10b aufgrund einer Sonneneinstrahlung auf der rechten Seite 10a. Die Temperaturbestimmungseinrichtung 3 kann konfiguriert sein, die Oberflächentemperaturen von vorbestimmten Gegenständen 7a, 7b, d. h. die Objekttemperaturen, in unterschiedlichen Bereichen 10a, 10b des Insassenraums 5 zu bestimmen und hieraus mittels des funktionellen Zusammenhangs 20 bzw. der Regressionsgeraden 23 jeweils Lufttemperaturen 21 in den unterschiedlichen Bereichen des Insassenraums, in Figur 3A beispielsweise in den Bereichen 11a und 11b, zu bestimmen. Auf diese Weise können Inhomogenitäten und/oder Asymmetrien einer Temperaturverteilung im Insassenraum 5 erkannt werden. Asymmetrien können beispielsweise durch Sonneneinfall auf einer Seite entstehen. Inhomogenitäten können durch Abstrahlung anderer Wärmequellen, z. B. des Motors, entstehen.

Die Temperaturbestimmungseinrichtung 3 ist ferner konfiguriert, in Abhängigkeit von Messdaten der Sensoreinrichtung 2 eine Oberflächentemperatur 41, vorzugsweise eine Gesichts- und/oder Handtemperatur, für mindestens einen Insassen 32 des Insassenraums zu bestimmen. Die Bestimmung einer Gesichts- oder Handtemperatur anhand eines IR-Kamerabildes ist an sich wiederum aus dem Stand der Technik bekannt und daher hier nicht näher beschrieben.

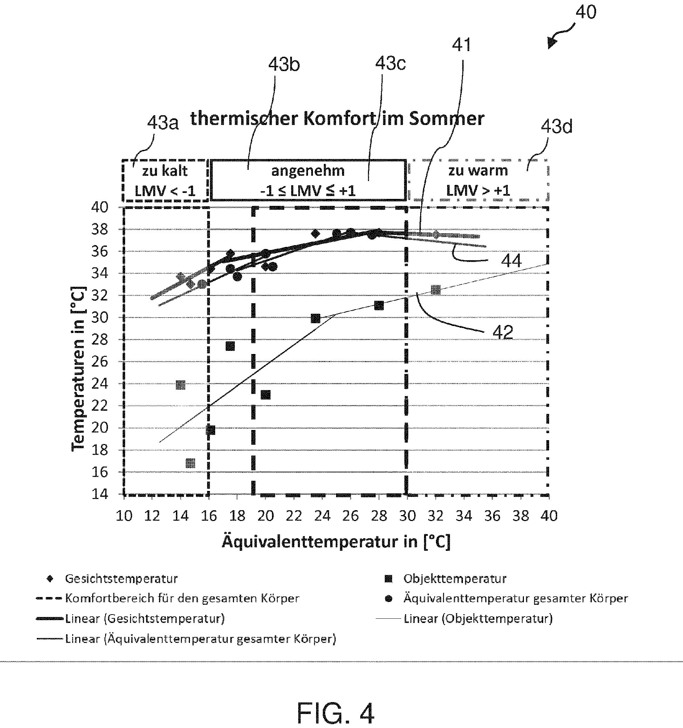

Die Temperaturbestimmungseinrichtung 3 ist jedoch konfiguriert, aus der bestimmten Oberflächentemperatur 41 mittels eines zweiten funktionellen Zusammenhangs 40 ein Maß für die Personenbehaglichkeit 43a, 43b, 43c, 43d zu bestimmen. Dies ist in Figur 4 schematisch illustriert am Beispiel einer Gesichtstemperatur, die mittels einer IR-Sensoreinrichtung 2 bestimmt wird. Aus der Gesichtstemperatur wird eine Äquivalenttemperatur berechnet anhand einer vorab experimentell bestimmten Kennlinie . Die rautenförmigen Messpunkte geben Messwerte der Gesichtstemperatur an; die Linie 41 die entsprechende Kurve, die sich durch eine Regressionsanalyse ergibt und als Kennlinie der Gesichtsäquivalenttemperatur dient.

Vorstehend wurde bereits erwähnt, dass alternative oder zusätzlich eine Kennlinie 44 für die Äquivalenttemperatur des gesamten Körpers bestimmt werden kann, deren Verlauf im mittleren Temperaturbereich, der als behaglich empfunden ist, fast gleich ist, jedoch in den Außenbereichen etwas unterschiedlich ist, wie vorstehend ebenfalls beschrieben wurde.

Hierbei wird zusätzlich die Oberflächentemperatur42 eines in einem Nahbereich des Insassen befindlichen Gegenstands bestimmt und als Korrekturwert zur Bestimmung des Maßes für die Personenbehaglichkeit (43a, 43b, 43c, 43d) verwendet.

Der Bestimmung des Maßes für die Personenbehaglichkeit liegt insbesondere die Erkenntnis zugrunde, dass nach Überschreiten eines Raumtemperaturschwellenwerts die Oberflächentemperatur eines Insassen bei weiterer Zunahme der Raumtemperatur nicht mehr oder verlangsamt ansteigt, da eine Wärmeabgabe des Insassen zunehmend über Schwitzen erfolgt. Entsprechendes gilt für sehr kalte Temperaturen, wobei die Oberflächentemperatur eines Insassen bei weiterer Abnahme der Raumtemperatur nicht mehr oder verlangsamt abfällt, da er durch Zittern versucht, die Oberflächentemperatur zu halten. Folglich kann die Insassenbehaglichkeit bei hohen Temperaturen und bei kalten Temperaturen sehr stark variieren, obwohl die Hauttemperatur des Insassen sich kaum ändert. Dieser Effekt kann durch Berücksichtigung der Objekttemperaturen 42, gemessen in der Nähe des Insassen erfasst und korrigiert werden, da Objekttemperaturen sich auch in diesen Temperaturfenstern anders verändern als die Haupttemperatur, da Objekte weder "schwitzen" noch "frieren".

Über experimentelle Messungen mit Testpersonen oder Messpuppen können diese Effekte quantifiziert werden, um einen entsprechenden funktionellen Zusammenhang 40 zu ermitteln.

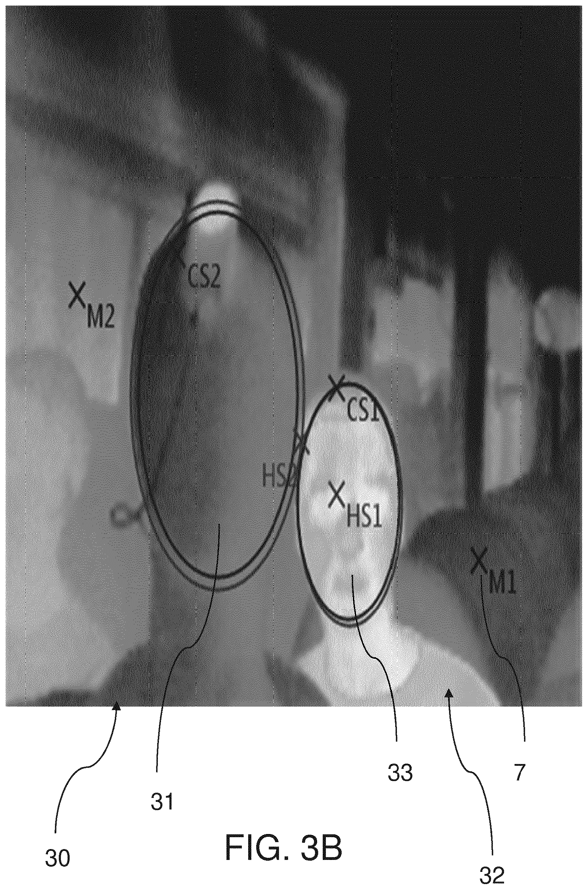

Dies ist in Figur 3B beispielhaft illustriert. Figur 3B zeigt ein IR-Bild eines beispielhaften Messaufbaus zur experimentellen Bestimmung der Kennlinie 41 oder 44 bzw. des zweiten funktionellen Zusammenhangs. Hierbei wird in den Insassenraum, für den die Kennlinie 40 bestimmt werden soll, eine Messpuppe 30 platziert und dahinter eine Testperson als Insasse 32. Die Messpuppe ist mit mehreren Sensoren versehen, um auf herkömmliche Weise anhand der Sensordaten eine Äquivalenztemperatur des Gesichts und/oder des gesamten Körpers für diese Messpuppe zu bestimmen. Gleichzeitig wird mit der IR-Sensoreinrichtung der Insassenraum inkl. der hinter oder vor der Messpuppe sitzenden Testperson sowie ein Objekttemperatur, an der oberen Sitzecke 7 aufgenommen. Mit den Bezugszeichen 31 und 33 sind die Gesichtsbereiche von Messpuppe und Testperson bezeichnet, die von der Bildauswertesoftware der IR-Kamera erkannt und durch Einkreisung gekennzeichnet sind. Anhand dieser experimentell gewonnenen Messdaten kann durch eine statistische Analyse, z. B. durch eine Regressionsanalyse, die Kennlinie 41 vorab bestimmt werden.

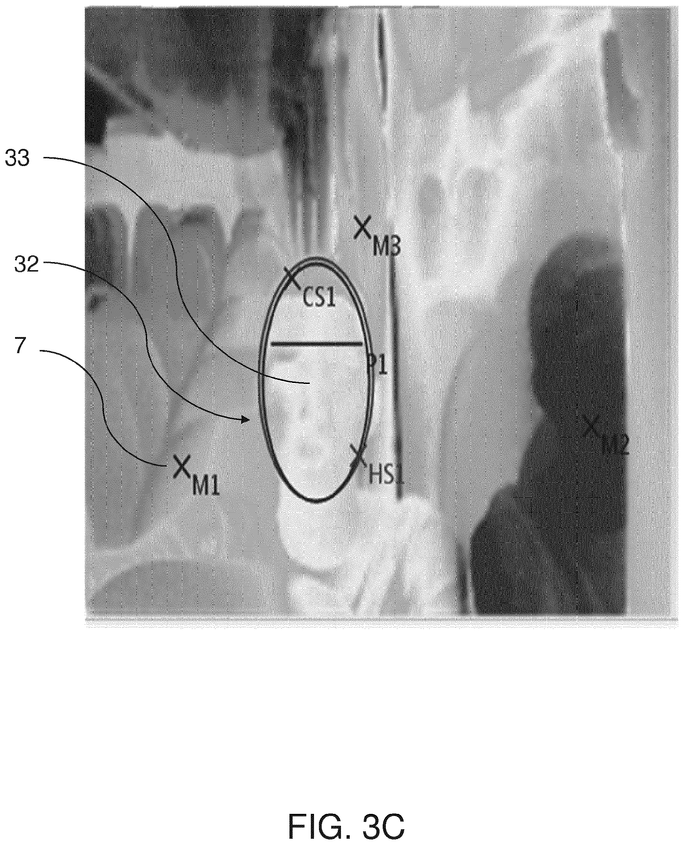

Figur 3C zeigt ein IR-Bild zur Messung eines Gesichts und eines Objekts gemäß einem Ausführungsbeispiel, um die Personenbehaglichkeit von Fahrzeuginsassen dann unter Verwendung der Kennlinie 41 zu bestimmen. Das Bild zeigt wiederum ein Wärmebild eines Insassen 32, insbesondere dessen Gesichtsbereich. Wie anhand des IR-Bildes gut erkennbar ist, ist die Gesichtstemperatur des Insassen höher als die Temperatur einer oberen Sitzecke 7 in der Nähe. Anhand der Kennlinie 41 kann nun aus der aus dem IR-Bild bestimmten Gesichtstemperatur und der Objekttemperatur der Sitzecke die Gesichtsäquivalenztemperatur bestimmt werden als Maß für Behaglichkeit des Insassen.

Entsprechend können dann den gemessenen Gesichts- und Objekttemperaturen unterschiedliche Personenbehaglichkeitsgrade zugeordnet werden, was wiederum in Figur 4 dargestellt ist. Im vorliegenden Beispiel wurden als Maß für die Personenbehaglichkeit vier Stufen von zu kalt ("LMV < -1") 43a, kalt, aber angenehm (LMV = -1) 43b, angenehm (-1 ≤ LMV ≤ +1) bis warm 43c, aber angenehm (LMV = +1) bis zu warm (LMV >+1) 43d festgelegt. Diese Einteilung ist jedoch lediglich beispielhaft.

Die Temperaturbestimmungseinrichtung 3 ist konfiguriert, je nach Jahreszeit unterschiedliche funktionelle Zusammenhänge bzw. mathematische Relationen 40 zu verwenden, um die Personenbehaglichkeit zu ermitteln. In Figur 4 ist die mathematische Relation 40 gezeigt, die typisch ist für Verhältnisse, die im Innenraum im Sommer auftreten. Entsprechend analog sind in der Vorrichtung 1 mathematische Relationen 40 hinterlegt, die für andere Jahreszeiten herangezogen werden, um je nach Jahreszeit diejenige mathematische Relation 40 zu verwenden, mit der am genauesten die Personenbehaglichkeit aus der Hauttemperatur und Objekttemperatur bestimmt werden kann.

Entsprechend können die jahreszeitenangepassten funktionellen Zusammenhänge für unterschiedlichen klimatische Vorgaben experimentell bestimmt werden, in dem die für unterschiedliche Jahreszeiten klimatischen Verhältnisse experimentell simuliert werden.

Die bestimmten Lufttemperaturen und Personenbehaglichkeiten können dann als Regelgröße der Klimaanlage 12 des Fahrzeugs dienen, um den Insassenraum des Fahrzeugs entsprechend zu temperieren. Hierbei werden die bestimmten Lufttemperaturen und Personenbehaglichkeiten verwendet, um entsprechende Regelwerte zu berechnen, die an eine Klimasteuerung 13 zur Steuerung oder Regelung der Raumtemperatur des Insassenraums gesendet werden. Hierdurch können gezielt Asymmetrien und Inhomogenitäten der Lufttemperatur im Insassenraum reduziert werden und die Personenbehaglichkeit auf ein gewünschtes Maß geregelt werden.

Obwohl die Erfindung unter Bezugnahme auf bestimmte Ausführungsbeispiele beschrieben worden ist, ist es für einen Fachmann ersichtlich, dass verschiedene Änderungen ausgeführt und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Vorrichtung zur Bestimmung einer Temperatur
- 2: Sensoreinrichtung, z. B. IR-Kamera
- 3: Temperaturbestimmungseinrichtung
- 4: Fahrzeug
- 5: Insassenraum
- 6a, 6b: Objekt, z. B. Fahrzeugsitz
- 7, 7a, 7b: Sitzecke
- 8: IR-Strahlung
- 10a, 10b: Teilbereich Insassenraum
- 11a, 11b: Luftbereich im Nahbereich der Sitzecke
- 12: Klimaanlage
- 13: Klimasteuerung
- 20: Erster funktionaler Zusammenhang
- 21: Lufttemperatur in Objektnähe
- 22: Objekttemperatur
- 23: Regressionsgerade gemäß erstem funktionalem Zusammenhang
- 30: Messpuppe
- 31: Gesichtsbereich
- 32: Insasse, Testperson
- 33: Gesichtsbereich
- 40: Zweiter funktionaler Zusammenhang
- 41: Kennlinie zur Gesichtsäquivalenttemperatur
- 42: Objekttemperatur
- 43a-d: Bereich der Personenbehaglichkeit
- 44: Kennlinie zur Äquivalenttemperatur des gesamten Körpers
- 50: Flugzeug

## Patentansprüche

1. Vorrichtung (1) zur Bestimmung einer Temperatur in einem Insassenraum (5) eines Fahrzeugs (4), umfassend
eine Sensoreinrichtung (2) zur Erfassung von Infrarot, IR,-Strahlung, vorzugsweise eine IR-Kamera und/oder Wärmebildkamera; und
eine Temperaturbestimmungseinrichtung (3), die konfiguriert ist, in Abhängigkeit von Messdaten der Sensoreinrichtung (2) eine Oberflächentemperatur eines in dem Insassenraum (5) des Fahrzeugs (4) befindlichen vorbestimmten Gegenstands (7a, 7b) zu bestimmen und aus der bestimmten Oberflächentemperatur (22) des Gegenstands (6a, 6b, 7a, 7b) mittels eines ersten funktionellen Zusammenhangs (20) eine Lufttemperatur (21) im Insassenraum des Fahrzeugs zu bestimmen;
wobei die Temperaturbestimmungseinrichtung (3) konfiguriert ist, in Abhängigkeit von Messdaten der Sensoreinrichtung (2) eine Oberflächentemperatur (41), vorzugsweise eine Gesichts- und/oder Handtemperatur, für mindestens einen Insassen des Insassenraums zu bestimmen,
wobei die Temperaturbestimmungseinrichtung (3) konfiguriert ist, aus der bestimmten Oberflächentemperatur (41) mittels eines zweiten funktionellen Zusammenhangs (40) ein Maß für die Personenbehaglichkeit (43a, 43b, 43c, 43d) zu bestimmen;
**dadurch gekennzeichnet, dass** zur Bestimmung des Maßes für die Personenbehaglichkeit eine Äquivalenttemperatur des Gesichts und/oder eine Äquivalenttemperatur eines gesamten Körpers des Insassen bestimmt wird.

2. Vorrichtung (1) nach einem der vorherigen Ansprüche, **dadurch gekennzeichnet, dass** die Temperaturbestimmungseinrichtung (3) konfiguriert ist, zur Erkennung von Inhomogenitäten und/oder Asymmetrien einer Temperaturverteilung im Insassenraum (5) die Oberflächentemperaturen von vorbestimmten Gegenständen (7a, 7b) in unterschiedlichen Bereichen (10a, 10b) des Insassenraums (5) zu bestimmen und hieraus mittels des ersten funktionalen Zusammenhangs (20) jeweils Lufttemperaturen (21) in den unterschiedlichen Bereichen des Insassenraums zu bestimmen.

3. Vorrichtung (1) nach einem der vorherigen Ansprüche, **dadurch gekennzeichnet, dass** die Temperaturbestimmungseinrichtung (3) konfiguriert ist, in Abhängigkeit von Messdaten der Sensoreinrichtung (2) eine Oberflächentemperatur (42) eines in einem Nahbereich des Insassen befindlichen Gegenstands zu bestimmen und als Korrekturwert zur Bestimmung des Maßes für die Personenbehaglichkeit (43a, 43b, 43c, 43d) zu verwenden.

4. Vorrichtung (1) nach einem der vorherigen Ansprüche, **dadurch gekennzeichnet, dass** die Temperaturbestimmungseinrichtung (3) konfiguriert ist, mittels des Korrekturwerts einen Effekt zu berücksichtigen,
a) wonach nach Überschreiten eines ersten Raumtemperaturschwellenwerts die Oberflächentemperatur eines Insassen bei weiterer Zunahme der Raumtemperatur nicht mehr oder verlangsamt ansteigt, da eine Wärmeabgabe des Insassen zunehmend über Schwitzen erfolgt; und/oder
b) wonach nach Unterschreiten eines zweiten Raumtemperaturschwellenwerts die Oberflächentemperatur eines Insassen bei weiterer Abnahme der Raumtemperatur nicht mehr oder verlangsamt abnimmt, da eine Wärmeerzeugung des Insassen zunehmend über Zittern erfolgt.

5. Vorrichtung (1) nach einem der vorherigen Ansprüche, **dadurch gekennzeichnet, dass** der zweite funktionelle Zusammenhang (40) eine Korrekturgröße umfasst, für die je nach Jahreszeit unterschiedliche Werte festgelegt sind.

6. Vorrichtung (1) nach einem der vorhergehenden Ansprüche, **dadurch gekennzeichnet, dass** die Vorrichtung konfiguriert ist, in Abhängigkeit von Messdaten der Sensoreinrichtung eine Insassenbelegung des Fahrzeugs zu bestimmen.

7. Vorrichtung (1) nach Anspruch 6, **dadurch gekennzeichnet, dass** die Temperaturbestimmungseinrichtung konfiguriert ist, in Abhängigkeit von der bestimmten Insassenbelegung das Maß für die Personenbehaglichkeit jeweils für mehrere Insassen, vorzugsweise für alle Insassen, zu bestimmen.

8. Fahrzeug (4), vorzugsweise Luftfahrzeug (50), Personenkraftwagen oder Omnibus (4), umfassend
eine Vorrichtung (1) zur Bestimmung einer Temperatur eines Insassenraums (5) nach einem der vorhergehenden Ansprüche; und
eine Klimaanlage (12) zum Temperieren eines Insassenraums des Fahrzeugs, umfassend eine Klimasteuerung (13) zur Steuerung oder Regelung der Raumtemperatur des Insassenraums, wobei die Steuerung oder Regelung der Raumtemperatur des Insassenraums durch die Klimasteuerung (13) in Abhängigkeit von Ausgangsdaten der Temperaturbestimmungseinrichtung erfolgt.

9. Fahrzeug nach Anspruch 8, umfassend eine Vorrichtung nach Anspruch 2, **dadurch gekennzeichnet, dass** die Klimasteuerung (13) ausgebildet ist, in Abhängigkeit von den für die unterschiedlichen Bereiche bestimmten Lufttemperaturen eine für die unterschiedlichen Bereiche spezifische Regelung oder Steuerung der Klimaanlage durchzuführen.

10. Fahrzeug nach Anspruch 8 oder 9, umfassend eine Vorrichtung nach Anspruch 6, **dadurch gekennzeichnet, dass** die Klimasteuerung (13) ausgebildet ist, eine Steuerung oder Regelung der Raumtemperatur in Abhängigkeit von der bestimmten Insassenbelegung durchzuführen, vorzugsweise nur in denjenigen Bereichen des Innenraums, in denen sich mindestens ein Insasse befindet.

11. Fahrzeug nach einem der Ansprüche 8 bis 10, umfassend eine Vorrichtung nach Anspruch 7, **dadurch gekennzeichnet, dass** die Klimasteuerung (13) ausgebildet ist, eine insassenspezifische Regelung oder Steuerung der Klimaanlage in Abhängigkeit von dem bestimmten Maß der Personenbehaglichkeit für den jeweiligen Insassen durchzuführen.

## Claims

1. Apparatus (1) for determining a temperature in a passenger compartment (5) of a vehicle (4), comprising
a sensor device (2) for detecting infrared, IR, radiation, preferably an IR camera and/or thermal imaging camera; and
a temperature determination device (3), which is configured to determine a surface temperature of a predetermined object (7a, 7b) located in the passenger compartment (5) of the vehicle (4) depending on measurement data of the sensor device (2) and to determine an air temperature (21) in the passenger compartment of the vehicle from the determined surface temperature (22) of the object (6a, 6b, 7a, 7b) by using a first functional relationship (20);
wherein the temperature determination device (3) is configured to determine a surface temperature (41), preferably a face and/or hand temperature, for at least one occupant of the passenger compartment depending on measurement data of the sensor device (2),
wherein the temperature determination device (3) is configured to determine a measure of the person's comfort (43a, 43b, 43c, 43d) from the determined surface temperature (41) by using a second functional relationship (40);
**characterized in that** an equivalent temperature of the face and/or an equivalent temperature of an entire body of the occupant is determined for determining the measure of the person's comfort.

2. Apparatus (1) according to one of the preceding claims, **characterized in that** the temperature determination device (3) is configured to determine the surface temperatures of predetermined objects (7a, 7b) in different areas (10a, 10b) of the passenger compartment (5) to detect inhomogeneities and/or asymmetries of a temperature distribution in the passenger compartment (5), and to determine from this air temperatures (21) in the different areas of the passenger compartment by using the first functional relationship (20) in each case.

3. Apparatus (1) according to one of the preceding claims, **characterized in that** the temperature determination device (3) is configured to determine a surface temperature (42) of an object located in a near area of the occupant depending on measurement data of the sensor device (2) and to use it as a correction value for determining the measure of the person's comfort (43a, 43b, 43c, 43d).

4. Apparatus (1) according to one of the preceding claims, **characterized in that** the temperature determination device (3) is configured to take into account, by means of the correction value, an effect,
a) according to which, after a first room temperature threshold value has been exceeded, the surface temperature of an occupant no longer rises or rises at a slower rate as the room temperature continues to increase, since heat dissipation by the occupant increasingly takes place via sweating; and/or
b) according to which, after falling below a second room temperature threshold value, the surface temperature of an occupant no longer decreases or decreases at a slower rate as the room temperature continues to decrease, since heat generation by the occupant increasingly takes place via shivering.

5. Apparatus (1) according to any one of the preceding claims, **characterized in that** the second functional relationship (40) comprises a correction value for which different values are defined depending on the season.

6. Apparatus (1) according to any one of the preceding claims, **characterized in that** the apparatus is configured to determine an occupant occupancy of the vehicle as a function of measurement data of the sensor device.

7. Apparatus (1) according to claim 6, **characterized in that** the temperature determination device is configured to determine the measure of the person's comfort for a plurality of occupants, respectively, preferably for all occupants, depending on the determined occupant occupancy.

8. Vehicle (4), preferably an aircraft (50), passenger car or bus (4), comprising
an apparatus (1) for determining a temperature of a passenger compartment (5) according to any one of the preceding claims; and
an air conditioning (12) for tempering a passenger compartment of the vehicle, comprising an air conditioning controller (13) for open or closed-loop controlling the room temperature of the passenger compartment, wherein the open or closed-loop controlling of the room temperature of the passenger compartment is performed by the air conditioning controller (13) depending on output data of the temperature determination device.

9. Vehicle according to claim 8, comprising an apparatus according to claim 2, **characterized in that** the air conditioning controller (13) is configured to perform open or closed-loop controlling of the air conditioning specific to the different areas as a function of the air temperatures determined for the different areas.

10. Vehicle according to claim 8 or 9, comprising an apparatus according to claim 6, **characterized in that** the air conditioning controller (13) is configured to perform an open or closed-loop controlling of the room temperature as a function of the determined occupant occupancy, preferably only in those areas of the interior in which at least one occupant is located.

11. Vehicle according to any one of claims 8 to 10, comprising an apparatus according to claim 7, **characterized in that** the air conditioning controller (13) is configured to perform occupant-specific open or closed-loop controlling of the air conditioning as a function of the determined level of the person's comfort for the respective occupant.

## Revendications

1. Dispositif (1) de détermination de la température dans l'habitacle (5) d'un véhicule (4), comprenant
un dispositif de détection (2) pour détecter le rayonnement infrarouge, IR, de préférence une caméra IR et/ou une caméra thermique ;
et un dispositif de détermination de température (3) qui est configuré pour déterminer, en fonction de données de mesure du dispositif de détection (2), une température de surface d'un objet prédéterminé (7a, 7b) se trouvant dans l'habitacle (5) du véhicule (4) et pour déterminer, à partir de la température de surface (22) déterminée de l'objet (6a, 6b, 7a, 7b), au moyen d'une première relation fonctionnelle (20), une température de l'air (21) dans l'habitacle du véhicule ;
le dispositif de détermination de température (3) étant configuré pour déterminer, en fonction de données de mesure du dispositif de détection (2), une température de surface (41), de préférence une température du visage et/ou des mains, pour au moins un occupant de l'habitacle,
le dispositif de détermination de température (3) étant configuré pour déterminer, à partir de la température de surface (41) déterminée, une mesure du confort des personnes (43a, 43b, 43c, 43d) au moyen d'une deuxième relation fonctionnelle (40) ;
**caractérisé en ce que**, pour déterminer la mesure du confort des personnes, on détermine une température équivalente du visage et/ou une température équivalente de l'ensemble du corps de l'occupant.

2. Dispositif (1) selon l'une des revendications précédentes, **caractérisé en ce que** le dispositif de détermination de température (3) est configuré pour déterminer les températures de surface d'objets (7a, 7b) prédéterminés dans différentes zones (10a, 10b) de l'habitacle (5) afin de détecter des inhomogénéités et/ou des asymétries d'une répartition de température dans l'habitacle (5) et pour déterminer à partir de celles-ci, au moyen de la première relation fonctionnelle (20), respectivement des températures de l'air (21) dans les différentes zones de l'habitacle.

3. Dispositif (1) selon l'une des revendications précédentes, **caractérisé en ce que** le dispositif de détermination de température (3) est configuré pour déterminer, en fonction de données de mesure du dispositif de détection (2), une température de surface (42) d'un objet situé dans une zone proche de l'occupant et pour l'utiliser en tant que valeur de correction pour déterminer la mesure de confort des personnes (43a, 43b, 43c, 43d).

4. Dispositif (1) selon l'une des revendications précédentes, **caractérisé en ce que** le moyen de détermination de température (3) est configuré pour prendre en compte un effet au moyen de la valeur de correction,
a) selon lequel, après le dépassement d'une première valeur de seuil de température ambiante, la température de surface d'un occupant n'augmente plus ou augmente plus lentement lorsque la température ambiante continue d'augmenter, car un dégagement de chaleur de l'occupant s'effectue de plus en plus par transpiration ; et/ou
b) selon lequel, après le passage en dessous d'une deuxième valeur de seuil de température ambiante, la température de surface d'un occupant ne diminue plus ou diminue plus lentement lorsque la température ambiante continue à diminuer, car une production de chaleur de l'occupant s'effectue de plus en plus par des tremblements.

5. Dispositif (1) selon l'une des revendications précédentes, **caractérisé en ce que** la deuxième relation fonctionnelle (40) comprend une grandeur de correction pour laquelle des valeurs différentes sont fixées en fonction de la saison.

6. Dispositif (1) selon l'une des revendications précédentes, **caractérisé en ce que** le dispositif est configuré pour déterminer l'occupation des occupants du véhicule en fonction de données de mesure du dispositif de détection.

7. Dispositif (1) selon la revendication 6, **caractérisé en ce que** le dispositif de détermination de température est configuré pour déterminer, en fonction de l'occupation déterminée des occupants, la mesure du confort des personnes respectivement pour plusieurs occupants, de préférence pour tous les occupants.

8. Véhicule (4), de préférence aéronef (50), voiture de tourisme ou autobus (4), comprenant
un dispositif (1) de détermination de la température d'un habitacle (5) selon l'une des revendications précédentes ; et
une climatisation (12) pour tempérer un habitacle du véhicule, comprenant une commande de climatisation (13) permettant de commander ou de réguler la température ambiante de l'habitacle, la commande ou la régulation de la température ambiante de l'habitacle par la commande de climatisation (13) s'effectuant en fonction de données de sortie du dispositif de détermination de température.

9. Véhicule selon la revendication 8, comprenant un dispositif selon la revendication 2, **caractérisé en ce que** la commande de climatisation (13) est conçue pour effectuer une régulation ou une commande de la climatisation spécifique aux différentes zones, en fonction des températures de l'air déterminées pour les différentes zones.

10. Véhicule selon la revendication 8 ou 9, comprenant un dispositif selon la revendication 6, **caractérisé en ce que** la commande de climatisation (13) est conçue pour effectuer une commande ou une régulation de la température ambiante en fonction de l'occupation déterminée des occupants, de préférence uniquement dans les zones de l'habitacle dans lesquelles se trouve au moins un occupant.

11. Véhicule selon l'une des revendications 8 à 10, comprenant un dispositif selon la revendication 7, **caractérisé en ce que** la commande de climatisation (13) est conçue pour effectuer une régulation ou une commande de la climatisation spécifique à l'occupant en fonction du degré de confort des personnes déterminé pour l'occupant respectif.
